# EUROPEAN PATENT APPLICATION

(11) **EP 1 580 336 A2**
(43) Date of publication of application: **28.09.2005**
(21) Application number: 05005791.8
(22) Date of filing: 17.03.2005
(51) Int. Cl.: E03B 7/07

(54) **Shut-off device to prevent leakage**

(30) Priority: 18.03.2004 IT RO20040002
(71) Applicant: Antonio, Finotello, 44021 Codigoro (Ferrara) (IT)
(72) Inventor: Antonio, Finotello, 44021 Codigoro (Ferrara) (IT)
(74) Representative: Paolini, Elena

(57) **Abstract**

The device is a safety apparatus able to stop the water flow (8) in case of prolonged consumption, longer of that setting out by means of a proper regulation, due to a water accidental leak. The device, moreover, gives date of the water consumption, without cables, using only the water abduction tube. The device working is permitted to a long life battery and to a generator (4) which transforms the flow kinetic energy into accumulated electric energy so avoiding the connection to the electric power.

## Description

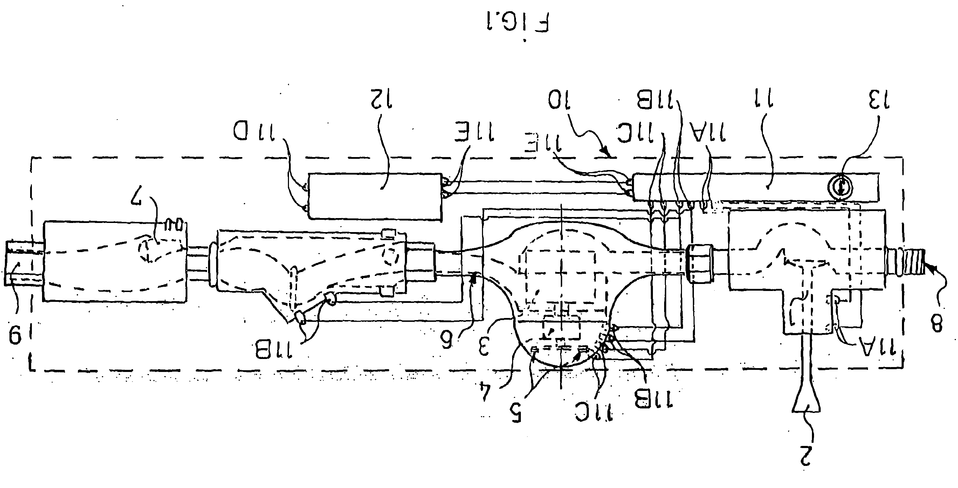

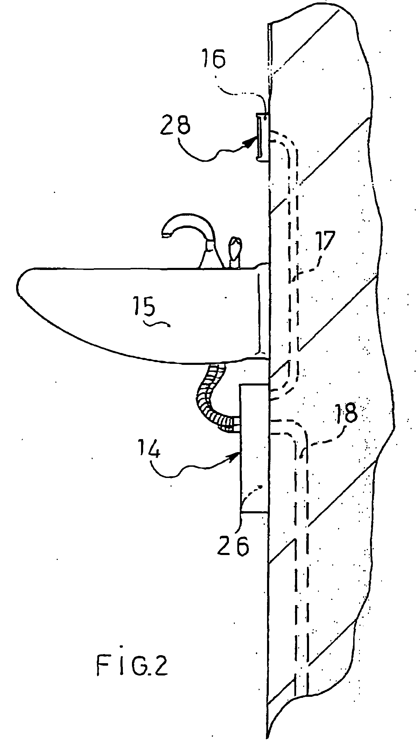

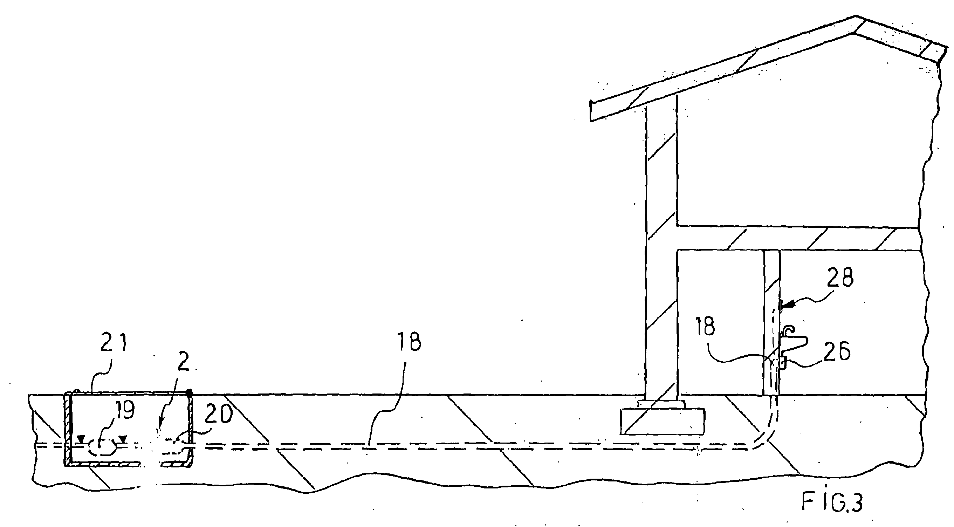

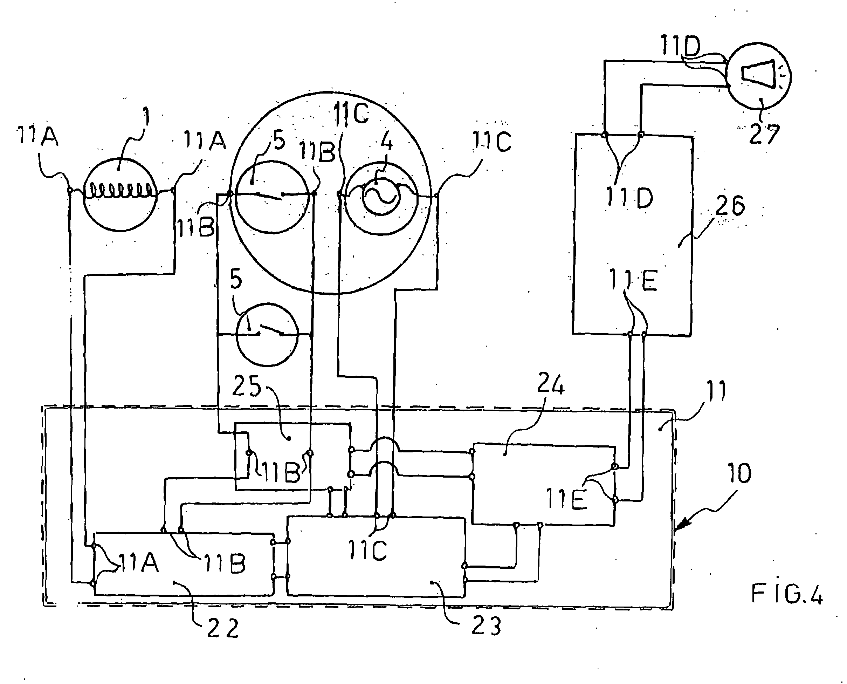

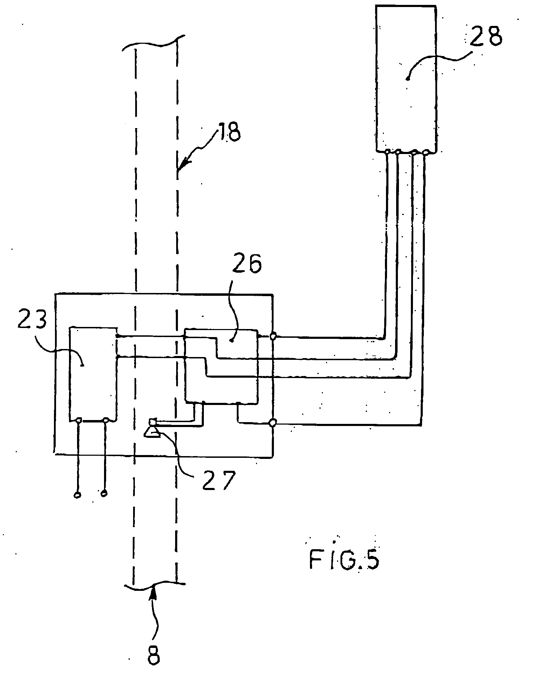

The invention refers to a safe device with an one's own energy duration having the aim to stop the water flow in the case of its consumption protracted in time. In the present framework for protracted consumption is meant any water use actuated in the domestic of industrial waterworks for a time longer than the setting one. So, a water leak out of control is part of said situation such as the water flow is continuous opened whereas in the normal use by means of taps the water outflow is inside a determined time and to be estimated in the single cases but always limited in time. The invented device is able to determine an action time of itself with electronic apparatuses set in the setting time and with apparatuses able to determine the closing of the water flow that remain in closing till they are manually put again in action. In the use with time shorter than the setting out time, the invented device lets to run the flow automatically clearing the past time count. The setting out of the action time is fixed to the users on the base of the necessities and to the waterworks uses. The invented device is to be mounted immediately downhill to the water counter so to control all the waterworks, also if it has big dimension and different ramifications. The present safety devices, known in the prior art, limit themselves to signal the getting over of the fixed time by the action of a audible and luminous detector and they must be fed to electric energy coming to power (at 220 Volt) so making they use of difficult application and with high costs to actuate the plant. Infact, to wire a plant that connects the water well with the building has bigger costs than the devices in use for these applications. The present invention has the aim to principally eliminated this problem, providing the invented device of energy duration determined to a turbine connected in axis to an alternator with magnetic sensors and long life battery and which exploits the water flow passing inside the piping to recharge said battery. This and other aims, as to take the water consumption for each use and for the total consumption, are obtained to the invented device. The device following described is illustrated in a merely indicative and not limiting way in the enclosed sheets 1, 2, 3, 4 and 5 that show an application form not exclusive. In particular in sheet 1 figure 1 is longitudinal view of the main components of the invented device closed inside a hermetic seal casing 10. In sheet 2 figure 2 is lateral view of the application of parts of the flow counter with, over the wash-basin 15, a containing body 16 for the display 28 of the water consumption and, placed under the same wash-basin, a casing 14 for the acoustic signal amplifier 26, with the water piping 18 joined to the taps of the wash-basin. In sheet 3 figure 3 is view of an example of application of the invented device with water well 21 and water counter 19 out of the building. Said water counter is generally given to the company that supplies the service of water furniture. In sheet 4 figure 4 is view of the components electric scheme and of the plant connections. In sheet 5 figure 5 is view of the electric scheme of part of the counter device of the water consumption. The invented device is started to the kinetic energy of the water flow 8 that puts in rotation the turbine 3 to which in axis an alternator 4 and moving magnetic sensors 5 are connected. The alternator 4 and a very long life battery, placed in the circuit, give the electric energy necessary to the function of the device for an unlimited time. When a tap is opened the water flow 8 puts in movement the alternator 4 and the sensors 5 connected to the electronic circuit 11 by means of cables connect to the clamps 11B, which connect the electronic circuit 11 to the moving magnetic sensors 5, and the clamps 11C that connect the feeder 23 and the circuit 11 to the sensors 5 placed on the alternator 4, so to determine the closing and the opening of the electronic circuit 11. The use of the sensors 5 derives to better safety reasons, to determine the stop or the closing of the electronic circuit 11, connected to the timer 22, provided to measure the running time of the water flow 8, such as the half-waves created to the alternator 4 are also directly red to the adjustable timer 22 and they are a sufficient signal to let start the running time count of the water flow 8. When the tap is opening, the timer 22 present inside the electronic circuit 11 is induced to measure the time starting from the first opening moment of the water flow 8 coming into the safety device and going out to the outflow 9 connected to the water piping 18. The adjustable timer 22 stops its count at the stopping of the water flow 8 detected to the moving magnetic sensors 5 and/or to the non-production of the half-waves created to the alternator 4. Setting out the maximum running time of the water flow 8, by means of the adjusting device of action time 13, each opening of the taps and consequently of the water flow 8 for lower times in comparison with the setting out time automatically determines the zero deflection of the running time count, actuated by the adjustable timer 22 with memory and with time comparison device. For bigger running times to the setting out time a control circuit, inside the electronic circuit 11 with impulse coming to the timer 22, gives tension to the clamps 11A and to the connected cables so determining the disarming of the eiecnovalve 1 with consequent stop of the water flow 8. In this case, i.e. in case of accidental leaks of the plants or for other causes, the device enters in function only to the reachiog of the setting out time so determining the please of the electrovalve 1 that, to be in condition to work again, must be manually rearmed by means of the arming device 2. The device moreover comprises an orifice plate 6 to separate the water flow and the alternator, of a casing 7 for the acoustic modulator 24 and of an acoustic transducer 27 to indicate to the user the water consumption to determined quantities or a water leak in the waterworks. The moving magnetic sensors 5, applied in axis to the turbine 3, permit to directly proportion the alternations number to the quantity of passing flow. The number of altercations sent to an adder 25, present in the electronic circuit 11, permits to know the water, quantity runs inside the invented device. Said adder 25, present in the electronic circuit 11, is not a totalizator but a device to sign to the acoustic modulator 24, i.e. an ultrasounds generator inside the water flow that runs in the piping, the delivery of each cubic meter to of used water from the user and the total water consumption. After the running of a water cubic meter inside the invented device, the adder 25 gives an impulse to the acoustic modulator 24 that creates a signal traduced in ultrasounds to the same modulator 24 by the circuit 12 and that is sent along the water flow present in the piping. Said ultrasounds signal is then received to the acoustic signal amplifier 26 that transforms said signal in an electric signal to be transmitted to the acoustic transducer 27 and/or to the totalizator display 28 where the user can read the water consumption. The acoustic modulator 24 is connected to the amplifier 26 by means of cables and clamps 11E and the amplifier 26 is connected to the acoustic transducer 27 and/or to the display 28 by cables and clamps 11D. The working of water consumption meter, other aim of the invention, is to be actuated in absence of connection with the electric power but, this absence is not indispensable, such as inside the buildings is present an electric connection 17. The invented device is inside a containing body 20 into which are placed the long life batteries and the hermetic seal casing 10 for the electric components. The invented device, on the base of that above described, is to be used without electric connection and it intervenes stopping the delivery of the water flow in case of water leak in every point of the waterworks or for a tap lets opening, such as these cases make part of the prolonged use, giving contemporary the possibility to visual and to know the water consumption. In the realization the construction particulars, the dimensions and the shapes of the invented device are to be changed remaining in the inventive concept of the present invention. The present described and illustrated device can have modifications or variations entering in the present inventive concept and all the components are changing with other technically equivalent For a better reading of the drawings is following given a list of the components signed on the same:
- 1 =: hand-arming electrovalve
- 2 =: arming device
- 3 =: turbine
- 4 =: alternator
- 5 =: movement magnetic sensors
- 6 =: orifice place of separation flow/alternator
- 7 =: casing for the ultrasound acoustic transducer
- 8 =: water flow
- 9 =: outflow of the water flow to the device
- 10 =: hermetic seal casing
- 11 =: electronic circuit
- 11A =: clamps of connection electrovalve/timer
- 11B =: clamps of connection magnetic sensors/circuit
- 11C =: clamps of connection magnetic sensors/alternator
- 11D =: clamps of connection amplifier/acoustic transdixer
- 11E =: clamps of connection acoustic modulator/amplifier
- 12 =: circuit to transform acoustic signal into ultrasounds
- 13 =: adjusting device of action time
- 14 =: casing for acoustic signal amplifier
- 15 =: wash-basin
- 16 =: containing body for the display
- 17 =: electrical connection
- 18 =: water piping
- 19 =: water counter
- 20 =: containing body
- 21 =: well
- 22 =: timer
- 23 =: feeder
- 24 =: acoustic modulator
- 25 =: adder
- 26 =: acoustic signal amplifier
- 27 =: acoustic transducer
- 28 =: totalizator display

## Claims

1. Safe device to prevent the leaks in the domestic and industrial waterworks, **characterized in that** for its working do not use cables and connections to the electric power but it is fed to a long life battery recharged to an alternator (4) connected in axis with a turbine (3) that transforms the kinetic energy of the water flow (8) into electric energy.

2. Safe device to prevent the leaks in the domestic and industrial waterworks, as to the previous claim, **characterized in that** it has moving magnetic sensors (5) in axis with the turbine (3) that permit to directly proportion the alternations number to the quantity of passing flow.

3. Safe device to prevent the leaks in the domestic and industrial waterworks, as to the previous claims, **characterized in that** the number of alternations given to the moving magnetic sensors gives the quantity of flow passing in the device with signal sends to the adder (25) present in the electronic circuit (11) and **in that** the adder (25) gives impulse to the acoustic modulator (24) for each cubic meter of water used or to unit multiple , permitting to the ultrasounds signal to be received to the signal amplifier (26) that transforms said signal in an electric signal, to be transmitted to the acoustic transducer (27) and/or to the totalizator display (28) where the user can read the water consumption.

4. Safe device to prevent the leaks in the domestic and industrial waterworks, as to claim 1, **characterized in that** it stops the water flow if the consumption is prolonged over a time sets out to the timer (13).

5. Safe device to prevent the leaks in the domestic and industrial waterworks, as to claims 1 and 4, **characterized in that** for running of the water flow (8) for lower times in comparison with the setting out time, the adjusting device (13) automatically determines the zero deflection and **in that** said adjusting device (13) starts a new count of the running time at the subsequent opening of the taps.

6. Safe device to prevent the leaks in the domestic and industrial waterworks, as to claims 1, 4 and 5, **characterized in that** if the fixed time setting to the adjusting device (13) is over, the water flow is automatically closed by means of the electrovalve (1) and **in that** the running flow condition is started again by means of a arming device (2) manually activated to the user.
